# EUROPÄISCHE PATENTSCHRIFT

(11) **EP 1 093 851 B1**
(45) Veröffentlichungstag und Bekanntmachung des Hinweises auf die Patenterteilung: **22.03.2006**
(21) Anmeldenummer: 00122239.7
(22) Anmeldetag: 17.10.2000
(51) Int. Cl.: B01J 23/00, B01J 23/72, B01J 23/76, B01D 53/94

(54) **Spinellmonolith-Katalysator und Verfahren zu seiner Herstellung**
Spinel monolithic catalyst and preparation process thereof
Catalyseur monolithique de type spinelle et procédé pour le produire

(30) Priorität: 19.10.1999 DE 19950325
(43) Veröffentlichungstag der Anmeldung: 25.04.2001
(73) Patentinhaber: BASF Aktiengesellschaft, 67056 Ludwigshafen (DE)
(72) Erfinder: Bender, Michael, Dr., 67063 Ludwigshafen (DE); Kumberger, Otto, Dr., 68163 Mannheim (DE); Hesse, Michael, Dr., 67549 Worms (DE)
(74) Vertreter: Isenbruck, Günter

(56) Entgegenhaltungen:
- EP-A- 0 042 471
- EP-A- 0 348 263
- EP-A- 0 687 499
- EP-A- 0 779 093
- EP-A- 0 779 094

## Beschreibung

Die Erfindung betrifft Spinellmonolith-Katalysatoren, Verfahren zu ihrer Herstellung und ihre Verwendung zur Reduktion von NOₓ in Verbrennungsabgasen.

Bei der Verbrennung von Kohlenwasserstoffen mit Luft als Oxidationsmittel entstehen insbesondere bei einem Luftüberschuß und bei hohen Temperaturen Stickoxide durch Oxidation des in der Luft enthaltenen Stickstoffs. Beispiele solcher Stickoxide sind NO, NO₂, NO₃, N₂O₃, N₂O₄ und N₂O₅. Als Schadstoffe sollen die Stickoxide möglichst vollständig aus den Verbrennungsabgasen entfernt werden, um eine Umweltbelastung zu vermeiden. Während Kraflwerk- und Industrieemissionen durch den Einsatz von Abgasreinigungsanlagen stärker zurückgehen, gewinnt die Verminderung des Schadstoffanteils in Kraftfahrzeugabgasen immer mehr an Bedeutung, vor allem aufgrund der Zunahme der Anzahl an Kraftfahrzeugen.

Zur Verringerung der NOₓ-Emissionen von Kraftfahrzeugmotoren sind viele Lösungen vorgeschlagen worden. Wirksame Lösungen zur Verminderung der NOₓ₋Mengen müssen eine Vielzahl von Kriterien erfüllen, beispielsweise insbesondere bei Verwendung von Katalysatoren:
- hoher Umsatz, d.h. weitgehende NOₓ-Entfernung, auch bei hohen und niedrigen Temperaturen, und bei häufigem Lastwechsel im Betrieb
- Vermeidung der Verwendung von Hilfsstoffen wie Ammoniak oder Harnstoff
- niedrige Herstellungs- und Betriebskosten
- lange Standzeit
- geringe N₂O-Erzeugung
- hohe mechanische Katalysatorstabilität.

Eine Reihe von Katalysatoren zur Reduktion von Stickoxiden ist bekannt Dabei geht eine Richtung der Entwicklung geeigneter Katalysatoren zu Spinell-Katalysatoren.

Die Verwendung von mit Kupfer imprägnierten CuAl₂O₄-Spinellen als Abgaskatalysator ist in der DE-A-195 46 482 beschrieben. Die Spinelle werden als Split eingesetzt

Auch in der EP-A-O 779 093 sind entsprechende Spinellkatalysatoren zur Reduktion von Stickoxiden und zur Oxidation von Kohlenwasserstoffen beschrieben. Die Spinelle basieren auf Zink, Kupfer und Aluminium und werden in Form von Split eingesetzt.

Auch in der EP-A-0 676 232 sind zur Abgasbehandlung einsetzbare Spinellkatalysatoren beschrieben, die den Gehalt an Stickoxiden im Abgas vermindern. Es handelt sich um Zinkaluminiumspinelle, die durch Fällung aus Vorläuferlösungen erhalten werden können. Die Fällungsprodukte können durch Sprühtrocknen oder Fiashverdampfung des Lösungsmittels getrocknet werden und fallen als Pulver an. Es ist auch möglich, die Katalysatorvorläufer beispielsweise mit Harnstoff oder Glycin zu vermischen und das Gemisch zu verbrennen, wobei neben der Spinellbildung durch die hohe Temperatur gleichzeitig eine Calcinierung erfolgt. Es ist beschrieben, daß die Katalysatoren in Form von Waben vorliegen können, jedoch ist kein Herstellungsverfahren für die Wabenformkörper angegeben.

DE 195 46 484 A1 betrifft ein Verfahren zum Betreiben einer Reinigungsanlage für Gase, insbesondere für Abgase von stöchiometrisch betriebenen Ottomotoren, bei welchem ein einen Katalysator aufweisender Filterkörper dem Gasstrom ausgesetzt und Schadstoffe katalytisch umgesetzt werden. Der Katalysator ist ein spinnellhaltiger Festkörper. Dieser Festkörper wird in Form von Split von dem zu behandelnden Gasstrom durchströmt

Die Spinell-Katalysatoren werden vorzugsweise in Kraftfahrzeugen nicht in Form von Split oder Granulat, sondern in Form von Wabenkörpern eingesetzt, die aus dem Katalysatormaterial bestehen und eine Anzahl im wesentlichen zueinander paralleler Kanäle aufweisen, durch die das zu behandelnde Gas strömt. Derartige Wabenkörper können beispielsweise in der Querschnittsansicht Bienenwaben entsprechen. Die einzelnen Kanäle können auch einen runden oder rechteckigen, oder insbesondere quadratischen Querschnitt aufweisen, so daß der Querschnitt durch den Wabenkörper einer rechtwinkligen Gitterstruktur entspricht.

Unterschiedliche Verfahren zur Herstellung von Spinell-Wabenkörper sind vorgeschlagen worden.

In der DE-C-36 19 337 ist ein Verfahren zur Herstellung von TiO₂-SiO₂-Oxidverbindungen, die zudem auch Zirkoniumdioxid enthalten können, beschrieben. Dazu wird eine wäßrige Lösung, die aktive Bestandteile wie Vanadium und Kupfer enthält, oder ein Pulver der aktiven Bestandteile in Form der Oxide zusammen mit einem Verformungshilfsmittel zu einem Titan enthaltenden Oxid, wie TiO₂, TiO₂-SiO₂ und TiO₂-SiO₂-ZrO₂ gegeben. Sodann werden die Bestandteile vermischt und verknetet, während eine geeignete Wassermenge zugegeben wird. Das Gemisch wird dann in einer Extrudierverformungsvorrichtung verformt. Das geformte Produkt wird getrocknet und calciniert.

Die bekannten Katalysatoren weisen noch nicht bei allen Anwendungen einen hinreichenden katalytischen NOₓ-Abbau auf.

Aufgabe der vorliegenden Erfindung ist die Bereitstellung von Spineffmonolith-Katalysatoren, die gegenüber bekannten Katalysatoren eine verbesserte Leistung zeigen und insbesondere eine Verbesserung des katalytischen NOₓ-Abbaus bewirken.

Die Aufgabe wird erfindungsgemäß gelöst durch einen Spinellmonolith-Katalysator, herstellbar durch
a) Herstellen oder Beschichten eines Monolithen mit einer zumindest oberflächlichen Aktivmasse aus einem Kupfer-Aluminium-Spinell, der zu 0 bis 10 Gew.% durch ZrO₂, CeO₂, SnO₂, WO₃, MoO₃, TiO₂, V₂O₅, La₂O₃ oder Gemische davon ersetzt und zusätzlich mit Edelmetallen dosiert sein kann,
b) Imprägnieren des Monolithen mit einer Lösung mindestens einer Verbindung von Elementen der 5. Nebengruppe des Periodensystems der Elemente, oder Zusatz dieser Elemente in Schritt a) in Form ihrer Oxide oder Salze, z.B. durch Einarbeitung in die eingesetzten Rohmassen,
c) Trocknen und gegebenenfalls Calcinieren, wobei der Spinellmonolith als Wabenkörper mit Kanälen mit einem Durchmesser von 1 bis 5 mm und einer Stegdicke von 0,2 bis 5 mm vorliegt.

Als Element der 5. Nebengruppe des Periodensystems der Elemente werden vorzugsweise Niob (Nb), Tantal (Ta) oder Gemische davon eingesetzt.

Es wurde erfindungsgemäß gefunden, daß die verbesserte Leistung der erfindungsgemäßen Katalysatoren nur bei Monolithen und nicht bei Split-Schüttungen auftritt. Gerade bei Imprägnierung von Spinellmonolithen mit diesen Verbindungen und gegebenenfalls nachfolgender Calcinierung werden hoch aktive Katalysatoren erhalten.

Als eine Ausführungsform der Erfindung wird der Monolith aus Spinellpulver des o. g. Spinells geformt. Hierzu können Vorläufer der Spinellkomponenten und gegebenenfalls Dotierungen eingesetzt werden. Die Herstellung kann nach dem vorstehend zum Stand der Technik beschriebenen Verfahren erfolgen. Weitere geeignete Verfahren sind in DE-A-44 19 974 und US 5,219,816 beschrieben.

Besonders vorteilhafte Formkörper, speziell Spinell-Wabenkörper, die keine Risse aufweisen, eine große mechanische Stabilität und Dauerstandfestigkeit besitzen und gegen Temperaturwechsel unempfindlich sind, werden erhalten durch Extrudieren von Spinellpulver und gegebenenfalls Extrudierhilfsmittel, Stabilisatoren, Schwundminderer, Porenbildner, Peptisier-mittel oder deren Gemische enthaltenden Formmassen, anschließendes Trocknen und Calcinieren der Extrudate, wobei die Formmasse zusätzlich Aluminiumoxide oder Aluminiumoxidhydrate und Metallnitrate enthält. Bevorzugt sind in wäßriger Lösung sauer reagierende Metallnitrate. Besonders bevorzugt ist Kupfernitrat Anstelle des bevorzugten Cu(NO₃)₂ · 3 H₂O können auch Hydrate mit weniger oder mehreren Molen Kristallwasser eingesetzt werden. Zudem können auch andere Metallnitrate eingesetzt werden, sofern deren Kationen Spinellbildner sind und das Vorliegen der entstehenden Metalloxide im Katalysator erwünscht ist.

Dabei wird die Formmasse vorzugsweise zu Wabenkörpern extrudiert, wie sie eingangs beschrieben sind. Typische Wabenkörper weisen Kanäle mit einem Durchmesser von 1 bis 5 mm und einer Stegdicke von 0,2 bis 5 mm auf.

Die Extrusion der Formmassen zu Wabenkörpern kann mit Vorschubgeschwindigkeiten von bis zu 80 cm/min erfolgen. Die Trocknungszeit bei Raumtemperatur beträgt in der Regel nur etwa eine Woche. Die erhaltenen Wabenkörper sind mechanisch sehr stabil und gegen Temperaturschwankungen sehr stabil. Alternativ kann das Spinellpulver auf Formkörper aus metallischen oder keramischen Fasern bzw. metallischen Drähten oder Blechen aufgebracht werden. Solche Formkörper sind beispielsweise in WO99/15292, EP-A-0 390 962, US 4,686,202, EP-A-0 564 830 oder DE-A-196 41 049 beschrieben.

Die Spinellpulver weisen vorzugsweise eine mittlere Teilchengröße von 0,1 bis 50 m, besonders bevorzugt 1 bis 30 m, insbesondere 2 bis 10 m auf Sie können nach unterschiedlichen Verfahren erhalten werden, wie sie beispielhaft in den vorstehenden Druckschriften wiedergegeben sind.

Die Herstellung der Spinellpulver kann beispielsweise durch Mischen der pulverförmigen Oxide der im Spinell enthaltenen Metalle, Verpressen der Oxidgemische und Calcinieren hergestellt werden. Dabei beträgt die Temperatur beim Calcinieren vorzugsweise mindestens 700°C. Als geeignete Oxide kommen ZrO₂, SiO₂, Al₂O₃, TiO₂, CeO₂, SnO₂, WO₃, MoO₃, La₂O₃ und V₂O₅ in Betracht.

Die Herstellung kann auch durch Mischen mit Metallsalzlösungen der im Spinell enthaltenen Metalle, anschließendes Ausfällen, Trocknen und Calcinieren erfolgen. Anstelle einer Lösung kann auch eine Suspension der Metallsalze eingesetzt werden. Vorzugsweise werden die Salze mit anorganischen Säuren, wie Nitrate, Sulfate, Carbonate oder Halogenide - je nach Löslichkeit - eingesetzt. Es können auch Salze organischer Säuren eingesetzt werden. Beispiele dafür sind Formiate, Acetate, Propionate, Oxalate oder Citrate. Die Fällung kann durch Zugabe von Fällungsmitteln wie Ammoniak, Alkalicarbonat, basisches Alkalicarbonat oder Hydroxide bewirkt werden.

Zudem können die Lösungen durch Sprühtrocknen oder Flash-Verdampfung getrocknet und pulverisiert werden. Nach dem Trocknen kann sich ein Calcinierschritt bei Temperaturen von vorzugsweise mindestens 600°C anschließen.

Weiterhin können die Verbindungen der Vorläufermetalle des Spinells mit einer Kohlenstoff und Stickstoffquelle vermischt werden, worauf das Gemisch verbrannt wird. Bei der Verbrennung werden hohe Temperaturen gebildet, bei denen die Spinelle entstehen. Als Kohlenstoff und Stickstoffquelle kommen beispielsweise organische Verbindungen wie Harnstoff oder Glycin in Betracht.

Weitere geeignete Herstellungsverfahren sind beispielsweise in der DE-A-42 24 881 beschrieben. Beispielsweise können Metalloxide wie A1OOH (Böhmit), CuO und gegebenenfalls weitere geeignete Metalloxide in Gegenwart eines Bindemittels mit Wasser verknetet, extrudiert, getrocknet und calciniert werden, wobei die erhaltenen Stränge pulverisiert werden können. Anstelle der Metalloxide können die entsprechenden Hydroxide, Oxidhydrate, Carbonate, Salze organischer Säuren, Nitrate, Chloride, Sulfate oder Phosphate, wie vorstehend beschrieben, verwendet werden. Zur Herstellung von bimodalen oder polymodalen Katalysatoren kann man anstelle von AlOOH ein Gemisch aus AlOOH und Al₂O₃, vorzugsweise α- oder γ-Al₂O₃ verwenden. Dazu kann Al₂O₃ unterschiedlicher Porengrößenverteilungen eingesetzt werden.

Das Trocknen erfolgt vorzugsweise bei einer Temperatur im Bereich von 10 bis 200°C, besonders bevorzugt 20 bis 150°C, insbesondere 30 bis 120°C. Auch eine Gefriertrocknung ist möglich (z.B. -40 bis 0°C, 0,05 bis 0,8 bar). Diese ist besonders schonend, jedoch auch zeitaufwendiger. Die geometrische Form bleibt gut erhalten. Das Calcinieren erfolgt vorzugsweise bei einer Temperatur von 600 bis 900°C.

Erfindungsgemäß können dem Spinellpulver - gegebenenfalls neben Extrudierhilfsmittel, Stabilisatoren, Schwundminderem, Porenbildnern, Peptisierungshilfsmitteln oder deren Gemischen - zusätzlich Aluminiumoxide oder Aluminiumoxidhydrate und Metallnitrate zugesetzt werden. Dabei werden vorzugsweise Aluminiumoxidhydrat und z.B. Kupfernitrat in einem Molverhältnis Cu : Al von 0,3 bis 0,7, besonders bevorzugt 0,4 bis 0,6, eingesetzt. Als Aluminiumoxidhydrat werden dabei vorzugsweise Aluminiumoxidhydroxid, Aluminiumtrihydroxid oder Gemische davon eingesetzt. Die Metallsalze können in Form ihrer Hydrate eingesetzt werden. Bevorzugt beträgt die Menge an Aluminiumoxidhydrat und Metallnitrat 15 bis 55 Gew.-%, bezogen auf die Menge des Spinellpulvers. Das Spinellpulver wird dabei mit den zusätzlichen Bestandteilen zu einer plastischen Masse verknetet, die sodann zu Extrudaten, insbesondere Wabenkörpern, extrudiert wird. Das Extrudat wird sodann vorzugsweise bei Temperaturen im Bereich von 10 bis 200°C, besonders bevorzugt 20 bis 150, insbesondere 30 bis 120°C getrocknet und bei Temperaturen im Bereich von 500 bis 900°C calciniert.

Vorzugsweise wird das Mengenverhältnis von Aluminiumoxidhydrat zu Kupfernitrat so gewählt, daß es dem Mengenverhältnis entspricht, das in einem Spinell vorliegt. Bezogen auf das vorliegende Spinellpulver werden vorzugsweise 5 bis 25 Gew.-% A1OOH und 10 bis 30 Gew.% Kupfernitrat (z.B. Cu(NO₃)₂ . 3 H₂O) zugesetzt. Das Molverhältnis von Metalloxid zu Al₂O₃ in diesen Spinellvorläufern sollte nicht wesentlich unterstöchiometrisch sein. Vorzugsweise sollte es zwischen 0,6 bis 1,4 betragen.

Anstelle von AlOOH (Böhmit) können auch Al(OH)₃(Bayerit oder Hydrargillit) oder andere Aluminiumoxidhydrate sowie Gemische davon eingesetzt werden. Für eine Beschreibung der geeigneten Vielzahl an Aluminiumoxidhydraten kann auf Holleman-Wiberg, Lehrbuch der anorganischen Chemie, Walter D. Gruyter Berlin, New York 1985 verwiesen werden.

Bevorzugt werden Böhmit und Kupfernitrat mit einem Wassergehalt von 2 bis 6 Mol eingesetzt.

Die Herstellung des eingesetzten Spinellpulvers kann nach unterschiedlichsten Verfahren erfolgen. Beispiele sind
- die Copräzipitation aus Hydroxiden mit nachfolgender Calcinierung,
- das Mischen der Oxide und nachfolgende Calcinierung,
- die Verwendung alter recyclierter Waben,
- die Verwendung von Produktionsrestmengen und -rückständen,
- das Mischen der Salze, Sprühtrocknen und nachfolgende Calcinieren.

Die Extrusion der Formmasse zu den Wabenkörpern erfolgt vorzugsweise mit einer Vorschubgeschwindigkeit von bis zu 80 cm/min. Die Trocknungszeit bei Raumtemperatur beträgt vorzugsweise etwa eine Woche.

Gemäß einer weiteren Ausführungsform der Erfindung werden die Spinellmonolith-Katalysatoren durch calcinierendes Beschichten eines Trägers mit dem Spinell hergestellt. Der Träger kann dabei beispielsweise ein Monolith aus einem anorganischen oxidischen Material wie Cordierit sein, der per Wash-Coat mit dem Spinell imprägniert wird. der Träger kann auch ausgewählt sein aus Fasern, Split, Kugeln oder Drahtnetzen, die nach dem calcinierenden Beschichten zum Monolithen geformt werden.

Die Erfindung betrifft auch ein Verfahren zur Herstellung der vorstehenden Spinellmonolith-Katalysatoren, bei dem man die angegebenen Verfahrensschritte durchführt.

Das Imprägnieren des Monolithen mit einer Lösung mindestens einer Verbindung von Elementen der 5. Nebengruppe des Periodensystems der Elemente kann nach allen bekannten Verfahren erfolgen, beispielsweise durch Tränken, Aufsprühen usw.. Der imprägnierte Monolith wird sodann getrocknet und gegebenenfalls calciniert. Das Calcinieren wird im allgemeinen bei einer Temperatur im Bereich von 400 bis 1000°C, vorzugsweise 500 bis 900°C und insbesondere 600 bis 800°C durchgeführt.

Die Imprägnierung des Monolithen wird insbesondere durch Tränkung mit einer Lösung der Salze der Elemente der 5. Nebengruppe erreicht Bevorzugte Elemente sind Niob und Tantal sowie Gemische davon. Die Menge an Niob, Tantal oder Gemischen davon beträgt, bezogen auf das Gesamtgewicht des Katalysators, vorzugsweise 0,1 bis 20 Gew.-%, besonders bevorzugt 0,1 bis 10 Gew.-%.

Die erfindungsgemäßen Wabenkörper können als Katalysator oder Katalysatorträger für die katalytische Reinigung von Stickoxide enthaltenen Abgasen eingesetzt werden. Sie sind damit vor allem für die Entstickung von Verbrennungsabgasen, vorzugsweise Dieselabgasen gedacht. Sie können aber auch für die Entstickung anderer NOₓ-haltiger Abgase beispielsweise aus Kohle, Öl- oder Müllheizkraftwerken verwendet werden. Mit einer geeigneten Dotierung der Wabenkörper ist auch die Reinigung von N₂O-haltigen industriellen Abgasen denkbar. Auch die Dioxinzersetzung ist bei geeigneter Dotierung mit TiO₂, V₂O₅ und WO₃ möglich, wobei die Dioxinzersetzung gleichzeitig oder in unmittelbarem Anschluß mit der/an die Entstickung erfolgen kann. Vorzugsweise kann die Dioxinzersetzung unter oxidierenden Bedingungen an einem TiO₂/V₂O₅/WO₃-Katalysator erfolgen, wie er beispielsweise in EP-A-O 447 537 beschrieben ist. Auch andere polyhalogenierte Verbindungen enthaltende Abgase können gereinigt werden. Besonders bevorzugt werden die Wabenkörper, - insbesondere nach Edelmetalldotierung - als Träger mit Kohlenwasserstoffspeichervermögen für einen 3-Wege-Katalysator eingesetzt.

Die Erfindung wird nachstehend anhand von Beispielen näher erläutert.

### Beispiele

In den Beispielen werden als Katalysatormonolith 400 cpsi-Kupfer-Spinell-Waben mit verschiedenen Wandstärken zwischen 180 und 500 µm und quadratischen Kanalquerschnitten eingesetzt.

Die Wabe wurde mit einem NO_{X}-haltigen Gas folgender Zusammensetzung beschickt: NOx-Konzentration: 500 ppm; 10 % Sauerstoff, 5 % Wasser, Rest Stickstoff. Die Raumgeschwindigkeit betrug SV = 50.000 h⁻¹.

### Beispiel 1 (Vergleich)

Unter Einsatz des oben beschriebenen Kupfer-Spinell-Wabenkatalysators in undotierter Form wurde bei einer Temperatur von 200 bis 400°C ein mittlerer NOₓ₋Abbau von 4,6 % und eine Temperatur von 400 bis 200°C ein mittlerer NOₓ-Abbau von 4,9 % bestimmt.

### Beispiel 2

Es wurde der obige Katalysator eingesetzt, der jedoch mit einer wäßrigen Lösung von Nioboxalat getränkt, getrocknet und calciniert wurde. Der Anteil an Niob auf dem Kupfer-Spinell betrug, bezogen auf den gesamten Katalysator, 10 Gew.-%. Bei einer Temperatur von 200 bis 400°C wurde ein mittlerer NOₓ-Abbau von 14,6 % beobachtet, bei einer Temperatur von 400 bis 200°C ein mittlerer NOₓ₋Abbau von 10,9 %.

### Beispiel 3

Es wurde der obige Kupfer-Spinell-Wabenkatalysator eingesetzt, der jedoch mit einer wäßrigen Lösung von Tantalchlorid getränkt, getrocknet und calciniert wurde. Der Anteil an Tantal, bezogen auf den gesamten Katalysator, betrug 10 Gew.%. Bei einer Temperatur von 200 bis 400°C wurde ein mittlerer NOₓ₋Abbau von 13,5 % beobachtet, bei einer Temperatur von 400 bis 200°C von 10,0 %.

Aus den Ergebnissen geht hervor, daß die dotierten Spinell-Waben-Katalysatoren einen wesentlich verbesserten NOₓ-Abbau zeigen im Vergleich zum nicht dotierten Katalysator.

### Beispiel 4

Zum Nachweis, daß die Dotierungen mit Nb bzw. Ta auch durch Einarbeitung der Dotierverbindungen bei der Herstellung des Kupfer-Spinell-Pulvers erfolgen kann, wurde je eine Wabe gemäß der oben stehenden Herstellvorschrift gefertigt, jedoch unter Zusatz von Nioboxalat bzw. Tantalchlorid in wäßriger Lösung.

### Vergleichsbeispiel 2

Zum Nachweis, daß die Dotierungen mit Nb bzw. Ta ihre Wirkung nicht bei einem Kupfer-Spinell in Splitt-Form entfalten, wurde dieser jeweils mit und ohne die genannte Dotierung gemäß obiger Vorschrift hergestellt Die Extrusion erfolgte in Strangform, gefolgt von dem Kalzinationsschritt und der Verarbeitung zu Splitt mit Partikeldurchmessem von 0,7 bis 1,0 mm. Bei einer SV von 20.000 h⁻¹ und 1000 ppm NO im Eingas wurden an undotiertem Kupfer-Spinell NOₓ-Abbauwerte von 13 %, im Temperaturbereich 200-400°C gemessen. Demgegenüber betrugen die NOₓ-Abbauwerte des mit 10 % Nb dotierten Kupfer-Spinells 12 %. Ein Kupfer-Spinell mit 5 %iger Tantal-Dotierung erzielte Abbauwerte von 14 %. Die Genauigkeit dieser Werte liegt bei +/- 1,5 % abs.

## Patentansprüche

1. Spinellmonolith-Katalysator, herstellbar durch
a) Herstellen oder Beschichten eines Monolithen mit einer zumindest oberflächlichen Aktivmasse aus einem Kupfer- Aluminium-Spinell, der zu 0 bis 10 Gew.-% durch ZrO₂, CeO_{2,} SnO₂ *,* WO₃, MoO₃, TiO₂, V₂O₅, La₂O₃ oder Gemische davon ersetzt und zusätzlich mit Edelmetallen dotiert sein kann,
b) Imprägnieren des Monolithen mit einer Lösung mindestens einer Verbindung von Elementen der 5. Nebengruppe des Periodensystems der Elemente, oder Zusatz dieser Elemente in Schritt a) in Form ihrer Oxide oder Salze,
c) Trocknen und gegebenenfalls Calciniere wobei der Spinellmonolith als wabenköper mit Kanälen mit eimen Durchmesser von 1 bis 5 min und eine Stegdiche von 0.4 bis 5 mm vorliegt.

2. Spinellmonolith-Katalysator nach Anspruch 1, **dadurch gekennzeichnet, daß** der Monolith aus Spinellpulver. des Spinells wie in Anspunch 1 definiert geformt wird.

3. Spinellmonolith-Katalysator nach Anspruch 1, **dadurch gekennzeichnet, daß** der Monolith durch calcinierendes Beschichten eines Trägers mit dem Spinell wie in Anspruch 1 definiert hergestellt wird.

4. Spinelhnonohth-Katalysator nach Anspruch 3, **dadurch gekennzeichnet, daß** der Träger ein Monolith aus einem anorganischen oxidischen Material ist.

5. Spinellmonolith-Katalysator nach Anspruch 3, **dadurch gekennzeichnet, daß** der Träger ausgewählt ist aus Fasern, Split, Kugeln oder Drahtnetzen, und zum Monolithen geformt wird.

6. Verfahren zur Herstellung eines Spinellmonolith-Katalysators nach einem der Ansprüche 1 bis 5 durch Durchfuhren der angegebenen Verfahrensschritte.

7. Verwendung eines Spinellmonolith-Katalysators gemäß einem der Ansprüche 1 bis 5 zur Reduktion von NOₓ in Verbrennungsabgasen.

8. Verfahren zur katalytischen Reduktion von NOₓ in NOₓ, O₂ und Köhlenwasserstoffverbindungen enthaltenden Gemischen, wobei die Reduktion in Gegenwart eines Katalysators erfolgt, wie er in einem der Ansprüche 1 bis 5 definiert ist

## Revendications

1. Catalyseur monolithique de type spinelle qui peut être produit par
a) préparation ou enduction d'un monolithe avec une masse active au moins superficielle à base d'un spinelle de cuivre-aluminium qui peut être remplacé pour 0 à 10 % en poids par ZrO₂, CeO₂, SnO₂, WO₃, MoO₃, TiO₂, V₂O₅, La₂O₃ ou leurs mélanges et être dopé en supplément par des métaux nobles,
b) imprégnation du monolithe par une solution d'au moins un composé des éléments du cinquième groupe secondaire du système périodique des éléments ou addition de ces éléments dans l'étape a) sous la forme de leurs oxydes ou sels,
c) séchage et éventuellement calcination, le monolithe de spinelle se trouvant sous la forme d'un corps en nid d'abeilles à canaux présentant un diamètre de 1 à 5 mm et une épaisseur de paroi de 0,2 à 5 mm.

2. Catalyseur monolithique de type spinelle suivant la revendication 1, **caractérisé en ce que** le monolithe est mis en forme à partir d'une poudre du spinelle tel que défini dans la revendication 1.

3. Catalyseur monolithique de type spinelle suivant la revendication 1, **caractérisé en ce que** le monolithe est préparé par enduction avec calcination d'un support par le spinelle tel que défini dans la revendication 1.

4. Catalyseur monolithique de type spinelle suivant la revendication 3, **caractérisé en ce que** le support est un monolithe à base d'une matière oxydée inorganique.

5. Catalyseur monolithique de type spinelle suivant la revendication 3, **caractérisé en ce que** le support est choisi parmi des fibres, du gravillon, des billes ou des treillis métalliques et est mis en forme de monolithe.

6. Procédé de préparation d'un catalyseur monolithique de type spinelle suivant l'une des revendications 1 à 5, par mise en oeuvre des étapes de procédé indiquées.

7. Utilisation d'un catalyseur monolithique de type spinelle suivant l'une des revendications 1 à 5, pour la réduction de NOₓ dans des gaz d'échappement de combustion.

8. Procédé de réduction catalytique de NOₓ en mélanges contenant NOₓ, O₂ et des composés hydrocarbonés, la réduction ayant lieu en présence d'un catalyseur tel que défini dans l'une des revendications 1 à 5.

## Claims

1. A spinel monolith catalyst obtainable by
a) preparing or coating a monolith, with an at least surficial active composition comprising a copper-aluminum spinel which may be 0-10% by weight replaced by ZrO₂, CeO₂, SnO₂, WO₃, MoO₃, TiO₂, V₂O₅, La₂O₃ or mixtures thereof and additionally doped with noble metals,
b) impregnating the monolith with a solution of at least one compound of elements of transition group 5 of the periodic table or adding these elements in step a) in the form of their oxides or salts,
c) drying and optionally calcining, the spinel monolith being present as a comb structure having channels from 1 to 5 mm in diameter from 0.2 to 5 mm in partition wall thickness.

2. The spinel monolith catalyst according to claim 1 wherein the monolith is molded from spinel powder of the spinel as defined in claim 1.

3. A spinel monolith catalyst according to claim 1 wherein the monolith is prepared by calcinative coating of a support with the spinel as defined in claim 1.

4. The spinel monolith catalyst according to claim 3 wherein the support is a monolith composed of an inorganic oxidic material.

5. The spinel monolith catalyst according to claim 3 wherein the support is selected from the group consisting of fibers, spall, balls and wire nets and is molded into the monolith.

6. A process for preparing a spinel monolith catalyst according to any of claims 1 to 5 by carrying out the steps shown.

7. The use of a spinel monolith catalyst according to any of claims 1 to 5 for reducing NOₓ in combustion exit gases.

8. A process for catalytic reduction of NOₓ in mixtures comprising NOₓ, O₂ and hydrocarbonaceous compounds, which comprises effecting the reduction in the presence of a catalyst as defined in any of claims 1 to 5.
